# EUROPÄISCHE PATENTSCHRIFT

(11) **EP 1 725 832 B1**
(45) Veröffentlichungstag und Bekanntmachung des Hinweises auf die Patenterteilung: **19.12.2007**
(21) Anmeldenummer: 05701457.3
(22) Anmeldetag: 07.01.2005
(51) Int. Cl.: G01B 11/16, G01B 11/30, G01D 5/353, G01B 9/02

(54) **INTERFEROMETRISCHE MESSANORDNUNG**
INTERFEROMETRIC MEASURING ARRANGEMENT
DISPOSITIF DE MESURE INTERFEROMETRIQUE

(30) Priorität: 05.03.2004 DE 102004010754
(43) Veröffentlichungstag der Anmeldung: 29.11.2006
(73) Patentinhaber: ROBERT BOSCH GMBH, 70442 Stuttgart (DE)
(72) Erfinder: DRABAREK, Pawel, 75233 Tiefenbronn (DE)
(86) Internationale Anmeldenummer: PCT/EP2005/050055
(87) Internationale Veröffentlichungsnummer: WO 2005/085754

(56) Entgegenhaltungen:
- DE-A- 19 808 273
- US-A- 4 770 535
- US-A- 5 011 262
- US-A- 5 442 720

## Beschreibung

Die Erfindung bezieht sich auf eine interferometrische Messanordnung zum Messen von z.B. Formabweichungen, Lage, Oberflächeneigenschaften, Schwingungen, eines Objektes mit einem ein Modutationsinterferometer und eine Strahlungsquelle für kurzkohärente Strahlung aufweisenden Sendeteil und einer daran zum Zuführen der Strahlung über einen gemeinsamen Lichtweg angeschlossenen Messsondenanordnung und einem mit dem Sendeteil in einer Sende-/Empfangseinheit zusammengefassten Empfangsteil für die Auswertung der von der Messsondenanordnung zurückkommenden Messstrahlung.

### Stand der Technik

Eine derartige interferometrische Messanordnung ist in der DE 198 08 273 A1 angegeben. Bei dieser bekannten interferometrischen Messanordnung werden die an sich bekannten Verfahren der Heterodyn-Technik und der Zwei-Wellen-längen-Interferometrie unter Nutzung kurzkohärenter Strahlung miteinander kombiniert.

Wie in dieser Druckschrift näher beschrieben, lässt dieser Aufbau der Messvorrichtung u.a. einen Kohärenzmultiplex zu, indem in einem Modulationsinterferometer, dem vorteilhafterweise die aufwändigeren Komponenten der Messanordnung zugeordnet sind, über die verschiedenen Interferometerarme unterschiedliche Lichtweglängen eingeprägt werden, die größer sind als die Kohärenzlänge des sie durchlaufenden Lichts und die anschließend in einem Messabschnitt mit einer optischen Sondenanordnung und auf die Objektoberfläche ausgerichteten Sondenausgängen wieder ausgeglichen werden. Auf diese Weise werden die nur innerhalb der Kohärenzlänge auftretenden Interferenzerschei-nungen erhalten werden und die Messungen an der Objektoberfläche anhand der Phasendifferenzen in der angeschlossenen Auswerteeinrichtung ermöglicht, die in einer Baueinheit zusammen mit dem Modulationsinterferometer angeordnet ist. Auch können die für die Mehr-Wellenlängen-Interferometrie erforderlichen einzelnen Wellenlängen mittels einer Strahlzerlegungs- und Strahlempfangsein-heit aus dem (relativ) breitbandigen Strahlungsspektrum leicht geeignet herausgegriffen werden, so dass auch der Eindeutigkeitsbereich der Abstands- und Rauigkeitsrnessung oder anderer Oberflächeneigenschaften durch Bilden einer oder mehrerer synthetischer Wellenlängen in an sich bekannter Weise gegenüber den einzelnen Wellenlängen vergrößert werden kann. Auch weitere Vorteile des Aufbaus einer optischen Messvorrichtung mit einem kurzkohärenten Zwei- oder Mehr-Wellenlängen-Heterodyn-Interferometer sind in dieser Druckschrift genannt. Dieser Aufbau ergibt wegen der Trennung in die Sende-/Empfangseinheit mit dem Modulationsinterferometer und dem Empfangsteil bzw. der Auswerteeinrichtung eine bedienerfreundliche, robuste Anordnung, da die aufwändigere Sende-/Empfangseinheit räumlich getrennt ist von der Messsondenanordnung, die einen relativ einfachen Aufbau aufweisen kann und der eine einfache Handhabbarkeit ermöglicht. Zudem liegt ein Vorteil dieser bekannten interferometrischen Messanordnung darin, dass neben der für die Oberflächenmessung vorgesehenen Messsonde eine Bezugssonde vorhanden ist, die über eine weitere Lichtleitfaseranordnung mit dem Modulationsinterferometer verbunden ist und mit der die Ausrichtung oder auch Bewegungen eines das Messobjekt aufnehmenden Drehtisches erfasst werden können. Insgesamt handelt es sich bei einer derartigen interferometrischen Messanordnung um eine vom Aufbau und den Kosten her aufwändige Apparatur.

Der Erfindung liegt die Aufgabe zugrunde, eine interferometrische Messanordnung der eingangs genannten Art bereitzustellen, mit der ein verringerter Aufwand erzielbar ist.

### Vorteile der Erfindung

Diese Aufgabe wird mit den Merkmalen des Anspruches 1 gelöst. Hierbei ist vorgesehen, dass die Messsondenanordnung mehrere Messsonden aufweist, die über jeweilige optische Lichtwege an den gemeinsamen Lichtweg angekoppelt sind, und dass an einer Koppelstelle zwischen dem gemeinsamen Lichtweg und den jeweiligen Lichtwegen zu den Messsonden eine Schaltvorrichtung angeordnet ist, über die die verschiedenen Messsonden individuell mit der Sende-/Empfangseinheit in bidirektionale Übertragungsverbindung für die von dem Modulationsinterferometer zugeführte Strahlung einerseits und die Messstrahlung andererseits bringbar sind.

Mit diesen Maßnahmen wird eine Mehrfachnutzung der relativ aufwändig aufgebauten Sende-/Empfangseinheit erreicht, die auch eine stabile, zentrale Unterbringung und Wartung mit den erforderlichen Einstellarbeiten ermöglicht, während die Messsonden z.B. in verschiedenen Messstationen eines Fertigungsprozesses an geeigneten Stellen positioniert werden können.

Eine für die Handhabung und zuverlässige Messergebnisse günstige Ausgestaltung wird dadurch erzielt, dass der gemeinsame Lichtweg und/oder die jeweiligen Lichtwege monomode Lichtleitfasern umfassen.

Verschiedene vorteilhafte Ausbildungen bestehen darin, dass die Schaltvorrichtung manuell oder automatisch umschaltbare Verstellelemente aufweist. Unterschiedliche Ausführungen werden dadurch erhalten, dass zum Umschalten elektrisch, pneumatisch, hydraulisch oder magnetisch betriebene Betätigungselemente vorhanden sind.

Für eine Automatisierung sind weiterhin die Maßnahmen vorteilhaft, dass die Schaltvorrichtung über eine Steuereinrichtung angesteuert ist, an die zur Zuordnung der Ergebnisse zu den jeweiligen Messsonden und gegebenenfalls gesonderte Auswertungen auch die Sende-/Empfangseinheit angeschlossen ist. Die Steuereinrichtung kann z.B. der Empfangseinheit zugeordnet sein. Mit diesen Maßnahmen lassen sich z.B. die Messungen in einem Fertigungsprozess automatisch synchronisieren bzw. aufeinander abstimmen und in eine Fertigungssteuerung integrieren.

Verschiedene Anordnungsmöglichkeiten bestehen ferner darin, dass die Messsonden individuell einer zu vermessenden Oberfläche zugeordnet oder zuordenbar sind, einzelne Messkanäle einer Sondeneinheit bilden, zu Gruppen in einer oder mehreren Messstationen angeordnet sind, in einem übergeordneten Messgeräteverbund angeordnet sind oder in einer Kombination derartiger Anordnungen eingebracht sind. Auch können die Messsonden leicht umpositioniert oder gegen andere ausgetauscht werden, wobei einheitliche Adaptereinheiten für die Messköpfe der Sonden vorgesehen sein können. In der Steuereinrichtung können diese dann gesondert ausgewertet werden, wobei auch eine automatische Kennung der verwendeten Messköpfe vorgesehen sein kann.

### Zeichnung

Die Erfindung wird nachfolgend anhand von Ausführungsbeispielen unter Bezugnahme auf die Zeichnungen näher erläutert. Es zeigen:
- Fig. 1: eine schematische Darstellung einer interferometrischen Messanordnung mit einer Sende-/Empfangseinheit und mehreren angeschlossenen Messstationen in Blockdarstellung und
- Fig. 2: eine nähere Ausgestaltungsmöglichkeit der Messanordnung nach Fig. 1 in Blockdarstettung.

### Ausführungsbeispiel

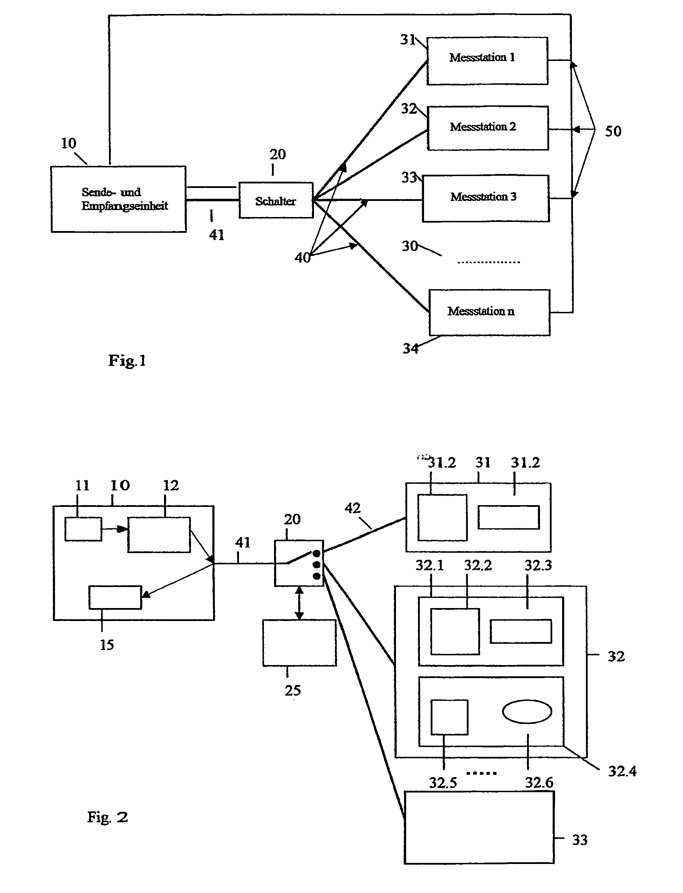

Eine in Fig. 1 dargestellte interferometrische Messanordnung zum Messen von Oberflächeneigenschaften eines Objektes, wie z.B. Rauigkeit, Rundheit oder auch Schwingungen weist eine Sende-/Empfangseinheit 10 und mehrere daran angeschlossene Messstationen 31, 32, 33, 34 einer Messanordnung 30 auf, die über einen gemeinsamen Lichtweg 41, eine daran angeschlossene Schaltvorrichtung 20 und jeweilige zu den Messstationen 31, 32, 33, 34 führende Lichtwege 42 an die Sende- und Empfangseinheit 10 optisch angeschlossen sind. Außerdem stehen die Sende-/Empfangseinheit 10 und die Messstationen 31, 32, 33, 34 über jeweilige elektrische Verbindungen miteinander in Verbindung. Der gemeinsame Lichtweg 41 sowie die zu den Messstationen 31, 32, 33, 34 führenden jeweiligen Lichtwege 42 sind vorteilhaft mittels insbesondere monomoder Lichtleitfasern 41 bzw. 42 ausgebildet.

Wie Fig. 2 zeigt, sind in der Sende-/Empfangseinheit 10 sowohl Komponenten des Sendeteils, nämlich eine Strahlungserzeugungseinheit bzw. Strahlungsquelle 11 für kurzkohärente breitbandige Strahlung, und ein ihr nachgeordnetes ModulationsInterferometer 12 sowie Komponenten eines Empfangsteils 15, wie pho-toelektrische Empfängerelemente und eine deren Signale aufnehmende und wei-terverarbeitende Auswerteeinrichtung angeordnet. In den Armen des Modulations-Interferometers 12 wird eine Lichtwegdifferenz erzeugt, die größer ist als die Kohärenzlänge der Strahlung. Diese optische Wegdifferenz wird in den Mess-stationen 31, 32, 33, 34, und zwar in den darin angeordneten Messsonden 32.1, 32.4 aufgehoben, so dass nachfolgend entsprechend den Abständen der erfassten Oberflächenstellen Interferenzen auftreten, wie in der eingangs genannten Druckschrift DE 198 08 273 A1 näher erläutert. Die sich aus den Interferenzen ergebenden Informationen werden in dem Empfangsteil 15 ausgewertet, wobei aus der breitbandigen Strahlung z.B. zwei verschiedene Wellenlängen zum Bilden einer synthetischen Wellenlänge herausgegriffen werden können, wie in der genannten Druckschrift ebenfalls näher erläutert. In den Messsonden der Messstationen 31, 32, 33, 34 sind in an sich bekannter Weise jeweilige Interferometerteile 31.1, 32.2, 32.5 mit einem Referenzarm und einem Messarm sowie auf die zu vermessende Oberfläche gerichtete Messabschnitte 31.2, 32.3, 32.6 angeordnet, die entsprechend den zu erfassenden Oberfilächenkonturen, wie z.B. in einer engen Bohrung, ausgebildet sind. Die gemessenen Oberflächeneigenschaften werden vorteilhaft z.B. heterodyninterferometrisch ausgewertet, wobei die Information in der Phasenverschiebung der erfassten Strahlung enthalten ist.

Mehrere Messsonden 32.1, 32.4 können in einer Messstation 32 untergebracht sein oder aber einzeln in einer komplexen Messanordnung an geeigneter Stelle positioniert sein, wie z.B. im Zusammenhang mit der ersten Messstation 31. Auch können mehrere Messkanäle einer Sonde, mit der z.B. unterschiedliche Abstände einer Oberfläche erfasst werden können, über die jeweiligen Lichtwege bzw. Lichtleitfasern 42 an die Schaltvorrichtung 20 angeschlossen sein.

Die Schaltvorrichtung kann im einfachsten Falle manuell zu betätigende oder automatisch umschaltbare Verstellelemente, wie z.B. verschiebbare oder drehbare Spiegel oder andere geeignete optische Koppelelemente, aufweisen. Die Umschaltung kann dabei z.B. elektrisch, pneumatisch, hydraulisch oder magnetisch mittels entsprechend ansteuerbarer Betätigungselemente vorgenommen werden. Die Steuerung erfolgt bei der automatischen Umschaltung vorteilhaft mittels einer Steuereinrichtung 25, die auch mit dem Empfangsteil 15 kombiniert sein kann und z.B. auch in der Sende-/Empfangseinheit 10 untergebracht ist. Die Auswertung kann dabei in Abstimmung auf die mittels der Schaltvorrichtung 20 gewählten Messsonde vorgenommen werden, wobei die Signale der verschiedenen Messsonden auch unterschiedlich ausgewertet werden können, z.B. durch jeweils zugeordnete Unterprogramme. Ferner kann die Steuereinrichtung 25 und/oder die Auswerteeinrichtung des Empfangsteils 15 in eine übergeordnete Fertigungssteuerung eingebunden sein, um während eines Fertigungsvorganges bestimmte Fertigungsschritte zu überprüfen. Hierbei erfolgt eine Koordination bzw. Synchronisation der Auswertung der Messergebnisse mit dem Fertigungsprozess über die Fertigungssteuerung.

Die einzelnen Messsonden, beispielsweise 32.1, 32.4 oder die in den weiteren Messstationen 31, 33 bzw. 34 enthaltenen Messsonden können z.B. mit austauschbaren Köpfen versehen sein, die an jeweilige Messaufgaben angepasst sind und auch einen einfachen Austausch bei Ausfall eines Messabschnittes zulassen. Zum einfachen Austausch können geeignete Adapter vorgesehen werden. Ferner ist es möglich, die Steuereinrichtung 25 oder die Auswerteeinrichtung des Empfangsteils 15 z.B. im Zusammenhang mit den elektrischen Verbindungen 50 sowie den Messsonden der Messstationen 31, 32, 33, 34 so auszubilden, dass eine automatische Zuordnung und Erkennung der Messsignale bei der Auswertung erfolgt.

Die Verstellelemente der Schaltvorrichtung 20 zum Herstellen der optischen Verbindung zwischen dem gemeinsamen Lichtweg 41 und den jeweiligen Lichtwegen 42 kann außer mittels diskreter optischer Elemente, wie z.B. Spiegel oder Prismen oder dgl., alternativ auch mittels integrierter optischer Elemente erfolgen, die keine mechanische Verstellung, sondern lediglich eine z.B. elektrische Ansteuerung erfordern.

Mit den erfindungsgemäßen Maßnahmen kann die Sende-/Empfangseinheit 10 gemeinsam für eine Vielzahl von Messsonden bzw. Messstationen 31, 32, 33, 34 verwendet und entfernt von diesen aufgestellt werden. Die Sende-/Emp-fangseinheit 10 kann an zentraler Stelle eingestellt bzw. justiert und gesteuert oder überwacht werden, wobei über entsprechende Datenleitungen auch entfernte Überwachungs- und Steuerungsmöglichkeiten geboten sind. Die relativ einfachen, kostengünstig aufbaubaren Messsonden können entsprechend einfach der jeweiligen Funktion angepasst werden.

## Patentansprüche

1. Interferometrische Messanordnung zum Messen von z. B. Formabweichun-gen, Lage, Oberflächeneigenschaften, Schwingungen eines Objektes mit einem ein Modulationsinterferometer (12) und eine Strahlungsquelle (11) für kurzkohärente Strahlung aufweisenden Sendeteil und einer daran zum Zuführen der Strahlung über einen gemeinsamen Lichtweg (41) angeschlossenen Messsondenanordnung (30) und einem mit dem Sendeteil in einer Sende-/Empfangseinheit (10) zusammengefassten Empfangsteil (15) für die Auswertung der von der Messsondenanordnung zurückkommenden Messstrahlung,
**dadurch gekennzeichnet,**
**dass** die Messsondenanordnung (30) mehrere Messsonden (32.1, 32.4) aufweist, die über jeweilige optische Lichtwege (42) an den gemeinsamen Lichtweg (41) angekoppelt sind, und
**dass** an einer Koppelstelle zwischen dem gemeinsamen Lichtweg (41) und den jeweiligen Lichtwegen (42) zu den Messsonden (32.1, 32.4) eine Schaltvorrichtung (20) angeordnet ist, über die die verschiedenen Messsonden (32.1, 32.4) individuell mit der Sende-/Empfangseinheit (10) in bidirektionale Übertragungsverbindung für die von dem Modulationsinterferometer (12) zugeführte Strahlung einerseits und die Messstrahlung andererseits bringbar sind.

2. Anordnung nach Anspruch 1,
**dadurch gekennzeichnet,**
**dass** der gemeinsame Lichtweg (41) und/oder die jeweiligen Lichtwege (42) monomode Lichtleitfasern umfassen.

3. Anordnung nach einem der vorhergehenden Ansprüche,
**dadurch gekennzeichnet,**
**dass** die Schaltvorrichtung (20) manuell oder automatisch umschaltbare Verstellelemente aufweist.

4. Anordnung nach Anspruch 3,
**dadurch gekennzeichnet,**
**dass** zum Umschalten elektrisch, pneumatisch, hydraulisch oder magnetisch betriebene Betätigungselemente vorhanden sind.

5. Anordnung nach einem der vorhergehenden Ansprüche,
**dadurch gekennzeichnet,**
**dass** die Schaltvorrichtung (20) über eine Steuereinrichtung (25) angesteuert ist, an die zur Zuordnung der Ergebnisse zu den jeweiligen Messsonden (32.1, 32.4) und gegebenenfalls gesonderte Auswertungen auch die Sende-/Empfangseinheit (10) angeschlossen ist.

6. Anordnung nach einem der vorhergehenden Ansprüche,
**dadurch gekennzeichnet,**
**dass** die Messsonden (32.1, 32.4) individuell einer zu vermessenden Oberfläche zugeordnet oder zuordenbar sind, einzelne Messkanäle einer Sondeneinheit bilden, zu Gruppen in einer oder mehreren Messstationen (31, 32, 33, 34 ...) angeordnet sind, in einem übergeordneten Messgeräteverbund angeordnet sind oder in einer Kombination derartiger Anordnungen eingebracht sind.

7. Anordnung nach einem der vorhergehenden Ansprüche,
**dadurch gekennzeichnet,**
**dass** sie in ein Steuerungskonzept eines Fertigungs- und/oder Prüfprozesses eingebunden ist.

## Claims

1. Interferometric measurement arrangement for measuring, for example, shape discrepancies, orientation, surface characteristics, oscillations of an object, with a transmitting part having a modulation interferometer (12) and a radiation source (11) for short-coherent radiation and with a measurement probe arrangement (30) connected thereto for supplying the radiation via a common light path (41) and with a receiving part (15), which is combined with the transmitting part in a transmitting/receiving unit (10), for evaluating the measurement radiation returning from the measurement probe arrangement, **characterized**
**in that** the measurement probe arrangement (30) has a plurality of measurement probes (32.1, 32.4), which are coupled to the common light path (41) via respective optical light paths (42), and
**in that**, at a coupling point between the common light path (41) and the respective light paths (42) to the measurement probes (32.1, 32.4), a switching apparatus (20) is arranged, via which the various measurement probes (32.1, 32.4) can individually be brought into bidirectional transmission connection with the transmitting/receiving unit (10) for the radiation supplied by the modulation interferometer (12) on the one hand and the measurement radiation on the other hand.

2. Arrangement according to Claim 1, **characterized**
**in that** the common light path (41) and/or the respective light paths (42) comprise monomode optical fibres.

3. Arrangement according to one of the preceding claims, **characterized**
**in that** the switching apparatus (20) has manually or automatically switchable adjustment elements.

4. Arrangement according to Claim 3, **characterized**
**in that** electrically, pneumatically, hydraulically or magnetically operated actuating elements are provided for switching purposes.

5. Arrangement according to one of the preceding claims, **characterized**
**in that** the switching apparatus (20) is driven via a control device (25), to which the transmitting/receiving unit (10) is also connected for the association of the results with the respective measurement probes (32.1, 32.4) and, if appropriate, separate evaluations.

6. Arrangement according to one of the preceding claims, **characterized**
**in that** the measurement probes (32.1, 32.4) are or can be individually associated with a surface to be measured, form individual measurement channels of a probe unit, are arranged to form groups in one or more measurement stations (31, 32, 33, 34...), are arranged in a superordinate measuring-instrument network or are incorporated in a combination of such arrangements.

7. Arrangement according to one of the preceding claims, **characterized**
**in that** the arrangement is integrated in a control concept of a manufacturing and/or testing process.

## Revendications

1. Installation de mesure interférométrique pour mesurer par exemple des déviations de forme, de position ou de propriétés de surface, des oscillations d'un objet avec un interféromètre à modulation 12 et une source de rayonnement 11 pour fournir un rayonnement cohérent ayant une partie de protection et une installation de sonde de mesure 30 raccordée par un chemin lumineux commun 41 pour fournir le rayonnement, et une partie récepteur 15 regroupée avec la partie émetteur dans une unité émission/réception 10 pour exploiter le rayonnement de mesure qui revient dans l'installation de sonde de mesure,
**caractérisée en ce que**
l'installation de sonde de mesure 30 comporte plusieurs sondes de mesure 32.1, 32.4 couplées par des chemins lumineux optiques, 42 à un chemin optique commun 41 ; et
en un point de couplage entre le chemin de lumière 41 commun et chaque chemin de lumière 42 vers les sondes de mesure 32.1, 32.4 on a un dispositif de commutation 20 par lequel les différentes sondes de mesure 32.1, 32.4 sont reliées individuellement à l'unité d'émission/réception 10 suivant une liaison de transmission bidirectionnelle d'une part pour le rayonnement fourni à l'interféromètre à modulation 12 et d'autre part le rayonnement de mesure.

2. Dispositif selon la revendication 1,
**caractérisé en ce que**
le chemin de lumière 41 commun et/ou les chemins de lumière respectifs 42 comportent des fibres guide de lumière mono mode.

3. Dispositif selon l'une des revendications précédentes,
**caractérisé en ce que**
le dispositif de commutation 20 comporte des éléments de réglage à commutation manuelle ou automatique.

4. Dispositif selon la revendication 3,
**caractérisé par**
des éléments d'actionnement électriques, pneumatiques, hydrauliques ou magnétiques pour assurer la commutation.

5. Dispositif selon l'une des revendications précédentes,
**caractérisé en ce que**
le dispositif de commutation 20 est commandé par une installation de commande 25 à laquelle est également reliée l'unité d'émission/réception 10 pour fournir les résultats des différentes sondes 32.1, 32.4.

6. Dispositif selon l'une des revendications précédentes,
**caractérisé en ce que**
les sondes de mesure 32.1, 32.4 sont associées individuellement à une surface superficielle à mesurer et différents canaux de mesure forment une unité de sonde, regroupées en une ou plusieurs stations de mesure 31, 32, 33, 34 reliées par une combinaison principale d'appareils ou une combinaison de tels dispositifs.

7. Dispositif selon l'une des revendications précédentes,
**caractérisé en ce qu'**
il est intégré dans le concept de commande d'un procédé de fabrication et/ ou de contrôle.
